Europäisches Patentamt

European Patent Office

Office européen des brevets

(11) Publication number: **0 279 407**
**A2**

# EUROPEAN PATENT APPLICATION

(21) Application number: **88102216.4**

(51) Int. Cl.4: **H01B 1/12**

(22) Date of filing: **15.02.88**

---

(30) Priority: 16.02.87 JP 31602/87
22.05.87 JP 123996/87

(43) Date of publication of application:
**24.08.88 Bulletin 88/34**

(84) Designated Contracting States:
**DE GB**

(71) Applicant: **MITSUI MINING COMPANY, LIMITED**
**1-1, Nihonbashi-Muromachi 2-chome**
**Chuo-ku Tokyo(JP)**

(72) Inventor: **Miyazaki, Kazuhide**
**144-5, Wakamatsu**
**Abiko-shi Chiba(JP)**
Inventor: **Nishihama, Hideki**
**19-3, Idogi 2-chome**
**Ageo-shi Saitama(JP)**
Inventor: **Sawaura, Masaki**
**1380-1, Aza-Hachibankochi Oaza-Haraichi**
**Ageo-shi Saitama(JP)**

(74) Representative: **Strehl, Schübel-Hopf,**
**Groening, Schulz**
**Widenmayerstrasse 17 Postfach 22 03 45**
**D-8000 München 22(DE)**

(54) Electroconductive polymer film and method for producing the same.

(57) An electroconductive polyaniline-based resin containing a dopant is cast without using a binder by a film casting method into an electroconductive polymer film having a high strength and an adequate flexibility; in particular, one which has a film thickness of 15 to 100 $\mu$m or is formed into a porous film having a large surface area is advantageously used in a secondary cell with a substantial increase in unit capacity of the cell.

EP 0 279 407 A2

## Electroconductive Polymer Film And Method For Producing The Same

### Background of the Invention

This invention relates to an electroconductive polyaniline-based film which has enhanced strength, flexibility, and electroconductivity, and to a method for producing the same.

Polymer compounds are normally insulating materials, but there have been known some types of polymer compounds which, by adding a compound of a type which is so-called a doping agent (dopant), exhibit electroconductivity (hereinafter referred to as "doping"). Such polymer compounds include polypyrrole, polythienylene, and polyacetylene, which are doped to obtain electroconductive polymers which exhibit electroconductivities comparable to those in the range of semiconductors. However, these electroconductive polymers have been defective in that they tend to undergo deterioration in air or are difficult to mold. Hence their practical application has been impeded.

One of the applications of these electroconductive materials is in the form of a film or sheet (hereinafter simply referred to as "film") used as an electrical circuit element, an electrode, a surface heater, or an electromagnetic shielding material. Formation of electroconductive polymers into films is also being investigated.

For example, for electroconductive polyaniline, which has a relatively high stability among electroconductive polymers, the following film-forming methods have been proposed:

(1) A thin film is electrodeposited onto an electrode.

(2) Electroconductive polyaniline powder is filled with a carbon filler and a fluorinated polymer filler, and then compression molded into a pellet-like film.

(3) Electroconductive polyaniline is molded using a meltable polymer as a binder (Japanese Patent Publication OPI No. 281463/1986).

However, the method (1) has a problem in that, when the grown deposit is released from the substrate electrode, it is fragile and cannot be used independently. Therefore, although it can be used as active material for Li secondary battery, it is not suitable for use as an actual cell construction, because the as-grown polyaniline film must be inevitably accompanied by the substrate electrode, resulting in an inconvenience of incorporating the active material.

On the other hand, the pellet-based molding of method (2) is easy to handle as compared with the above-described electrodeposition film but, it is considerably inferior in electroconductivity due to a high contact resistance between particles. Also, this method cannot produce a thin film. Moreover, method (3) has a problem in that it results in a reduced electroconductivity to the extent that the binder component is present.

With a view to obviate all of the prior art defects of electroconductive polymer films, it is a primary object of the present invention to provide an electroconductive polymer film which has superior electroconductivity, strength, and flexibility, and a method for producing the same.

### Summary of the Invention

In accordance with the present invention, there is provided a first electroconductive polymer film comprising an electroconductive polyaniline-based resin containing a dopant, which is monolithically formed without using a binder. The film is produced by casting the electroconductive polyaniline-based resin obtained by electrolytic polymerization into a film.

There is also provided according to the present invention a second electroconductive polymer film, which has an enhanced electrical capacity per unit weight when used as active material for secondary cells. The second film comprises an electroconductive polyaniline-based resin containing a dopant, which is monolithically formed without using a binder and has a thickness of 15 to 100 $\mu$m. This film is produced by uniformly pulverizing an electroconductive polyaniline-based resin obtained by electrolytic polymerization and dissolving it in solvent(s) to obtain a dispersion or solution, which is then cast into a film by a film casting method.

There is further provided according to the present invention a third electroconductive polymer film comprising an electroconductive polyaniline-based resin containing a dopant, which is monolithically formed without using a binder and processed into a porous film. The third film according to the present invention is produced by using an excess of an electroconductive polyaniline-based resin produced by electrolytic

2

polymerization to obtain a slurry-forming, uniform dispersion, which is then cast into a porous film by a film casting method. The third electroconductive polymer film may also be produced by uniformly mixing an electroconductive polyaniline-based resin produced by electrolytic polymerization and a soluble polymer or water-soluble salts to obtain a dispersion, which is then cast into a film by a film casting method. The soluble polymer or the water-soluble salts added are dissolved out to obtain a porous film.

## Detailed Description of the Invention

The first electroconductive polymer film comprises mainly an electroconductive polyaniline-based resin containing a dopant, which is formed into a film using a film casting method. Thus film according to the present invention also includes a film based on an ordinary polyaniline resin which is formed into a film by the film casting method, followed by the addition of a dopant to provide the electroconductivity.

The second and third electroconductive polymer films comprise mainly an electroconductive polyaniline-based resin containing a dopant. They are formed into either a very thin film or a porous film by the film casting method. These films according to the present invention also include those based on ordinary polyaniline resin which is cast into a very thin film or a porous film by the film casting method with a dopant then added to give the desired electroconductivity.

The polyaniline-based resin used in the present invention consists primarily of polyaniline and its derivatives, containing as needed polypyrrole, polythienylene, and/or polyacetylene, which by doping become electroconductive. The polyaniline derivatives include poly(o-anisidine), poly(m-anisidine), poly(o-toluidine), poly(m-toluidine), poly(N-methylaniline), poly(N-ethylaniline), polydiphenylamine, polytriphenylamine, and polyphenylenediamine. The electroconductive polyaniline-based resin is advantageously produced by electrochemical polymerization method, i.e. electrolytic polymerization; alternatively it is made from a polyaniline-based resin obtained by a chemical polymerization method, which is doped by chemical treatment.

Electrolytic polymerization is a method in which a monomer of the polyaniline-based resin is electrolytically oxidized in the presence of electrolytes comprising an inorganic acid (such as sulfuric acid or perchloric acid), or an organic acid (such as toluenesulfonic acid and/or a salt such as sodium sulfate or lithium perchlorate), or a quaternary ammonium salt (such as tetrabutylammonium fluoroborate or tetraethylammonium perchlorate), or a mixture of an inorganic acid and a quaternary ammonium salt, thereby introducing the electrolyte anion(s) into the resin to afford electroconductivity.

In the electrolytic polymerization, the electrolytes are dissolved and may be used in such amounts that an electric current required for the progress of the reaction is obtained, from 0.1 molar equivalent (preferably at least 0.3 molar equivalent) based on the monomer (aniline), up to saturation amounts of the electrolytes. Therefore, the concentration of the electrolytes depends on types of the electrolytes and the amount of water used, and it is typically 0.001 mole/liter to 3 mole/liter, preferably 0.05 mole/liter to 2 mole/liter.

The solvents used in the electrolytic polymerization are selected from a variety of organic solvents which are sufficiently stable and in which the electrolytes and water are largely soluble under the electrolytic oxidation conditions. They should also maintain the liquid state over the range of reaction temperatures. Such solvents include acetonitrile, nitrobenzene, propylene carbonate, and dimethylformamide. Alternatively, a plurality of solvents can be used. This reaction uses water as needed, which enhances the effects of the electrolytes and, in some cases, increases the rate of polymerization. Depending on the amounts of the electrolytes used, the concentration of water in the electrolyte solution is normally 0.1 mole/liter to 40 mole/liter, preferably 0.3 mole/liter to 10 mole/liter.

The anode material used in the electrolytic polymerization can be any material that is not damaged or caused to deteriorate in the anodic polymerization reaction, and is normally graphite or a metal such as platinum, ruthenium, gold, nickel, or stainless steel. In addition to the above materials, a titanium electrode coated with a noble metal which is practically used in industrial applications can also be used for the purpose. These electrodes can be shaped into plates, nets, fabrics, or the like.

Although the electrolyzing voltage and electrolyzing current for the electrolytic polymerization depend on the reaction conditions, the electrolyzing voltage is normally 0.9 V or more (vs. SCE: Standard Calomel Electrode), preferably 1.8 V to 3.0 V, within a range where the electrolytic solvent can be chemically stably used, and the electrolyzing current density is normally 0.001 mA/cm$^2$ to 5 mA/cm$^2$, preferably 0.01 mA/cm$^2$ to 3 mA/cm$^2$. The reaction temperature is below room temperature and above -50 degrees C, preferably above -30 degrees C.

On the other hand, the chemical polymerization method uses an oxidizing agent such as ammonium

3

persulfate or benzoyl peroxide to bulk-polymerize the monomer of the above-described polyaniline-based resin. The product obtained is a polyaniline-based resin with no electroconductivity, which is then after-treated by doping to produce the desired electroconductive polyaniline-based resin. In the doping, the polyaniline-based resin is chemically treated by exposing it to vapor of a halogen such as $I_2$, $Br_2$, or $Cl_2$, or by causing it to electrochemically adsorb a dopant such as an inorganic acid salt or a quaternary ammonium salt.

The electroconductive polymer film according to the present invention is produced by dissolving the resin obtained by the above-described electrolytic polymerization method or the chemical polymerization method and the after-treatment in a suitable solvent, and forming into a film by a film casting method. Alternatively, the film is produced by forming the polyaniline-based resin obtained by the chemical polymerization method into a film using a film casting method, and doping the film by the above-described after-treatment. The film casting method used in the present invention will now be described.

Solvents which can be used in the film casting method for the present invention include the following:

(1) Hydrocarbons such as benzene and toluene,

(2) Chlorinated hydrocarbons such as dichloromethane and 1,1,1-trichloroethane,

(3) Nitriles such as acetonitrile and benzonitrile,

(4) Ketones such as acetone and methylethylketone,

(5) Ethers such as anisole, tetrahydrofuran, and butylcellosolve,

(6) Nitro compounds such as nitroethane and nitrobenzene,

(7) Esters such as ethyl acetate and propylene carbonate,

(8) Alcohols such as methanol and ethanol,

(9) Organic acids such as acetic acid and propionic acid,

(10) Aromatic amines such as pyridine and aniline,

(11) Aprotic polar organic compounds such as N,N-dimethylformamide, dimethylsulfoxide, sulforane, N-methylpyrrolidone, and hexamethylphospholamide.

The electroconductive polyaniline-based resin (whether electroconductive or not) is dissolved or dispersed into the above-described solvent(s), and heated, stirred, or ball-milled as needed, to obtain a solution. In this case, the solvents are used in amounts of 5 to 10 parts by weight to one part by weight of the electroconductive polyaniline-based resin. This solution includes a polymer solution or a slurry in which the polymer is partially dissolved.

Among the above-listed solvents, (9), (10), and (11) are used at almost room temperature to prepare the solution, but the other solvents require heating. Of solvents (9) to (11) above, the aprotic polar organic compounds of (11) are particularly preferable for their high dissolving power.

The thus obtained solution is coated on a substrate such as glass or a polyethylene terephthalate film (PET film) by means of one of various coating methods, and the solvent is removed at room temperature, or by heating as needed, to form the desired film. A most suitable coating method can be selected from, but is not restricted to, a variety of methods such as solvent coating, dip coating, reverse roll coating, and doctor blade coating. The thickness of the film to be produced can be varied according to the purpose, but it is normally 1 to 1,000 $\mu$m, preferably 10 to 500 $\mu$m. If the film is thinner than 1 $\mu$m, it is likely to be uneven and to be torn. On the other hand, if the film is thicker than 1,000 $\mu$m, it also tends to be coated unevenly and it is difficult to maintain a uniform film thickness. Thus, neither case is preferable.

In the production of electroconductive polymer film according to the present invention, it is particularly preferable that the electroconductive polyaniline-based resin obtained by the above-described electrolytic polymerization method is pulverized, and the resulting powder cast into a film by the film casting method. This is because a large amount of dopant can be introduced into the film and a high-performance electroconductive polymer film can readily be obtained.

The first electroconductive polymer film according to the present invention has considerably enhanced electroconductivity and mechanical properties as compared with conventional products. However, the film has thus had only a small electrical capacity per unit weight (hereinafter simply referred to as "unit capacity") when used, for example, as a battery active material for secondary cells. The inventors of the present invention have conducted intensive investigation to further increase the unit capacity. It has been assumed that, in the above-described electroconductive polymer film, the cell reaction is limited to areas at or near the surface of the film, and that almost no cell reaction takes place inside the film. It has been found that a thin film with a specific film thickness or a porous film having an increased specific surface area has an increased unit capacity and considerably improved electrical performance, and thus the second and third electroconductive polymer films according to the present invention have been invented.

The second electroconductive polymer film according to the present invention is based on findings that a film having a thickness of 15 to 100 $\mu$m has a particularly large unit capacity and considerably improved electrical performance. This ultra-thin film is produced by finely pulverizing the electroconductive resin obtained by the above-described electrolytic polymerization method or the chemical polymerization method or the after-treatment and dissolving it in a sutiable solvent; the solution is then cast into a film having a thickness of 15 to 100 μm. The second electroconductive polymer film may also be produced by film casting the polyaniline-based resin obtained by the chemical polymerization method into a film having a thickness of 15 to 100 μm, which is then doped by the above-described after-treatment.

The fine pulverization method can be either dry or wet. In the dry method, for example, dried resin powder is pulverized in a ball mill or an automatic mortar, and then screened by an automatic sieve to obtain a uniform particle size. The wet method uses such an automatic mortar, a mixer, or a homogenizer. Further, the dry method and the wet method can be used in combination.

It is desirable that the polyaniline powder, after pulverization, have a particle size as small as possible, within the range from 0.1 to 10 μm, preferably from 0.1 to 5 μm. Larger or uneven particle sizes tend to result in uneven thickness, uneven surface, or cracking of the cast film. The thus finely pulverized resin can be uniformly mixed and dispersed to obtain a solution, and the solution can be blade coated to a thickness of 50 to 500 μm, which results in an ultra-thin film of 15 to 100 μm in thickness.

The thickness of the second ultra-thin film is set to 15 to 100 μm because when used as an electrode of a secondary cell, the unit capacity is particularly large in this range of thickness and yields improved cell performance. A film thicker than the range results in reduced cell performance, and a film thinner than the range is difficult to form.

The electroconductive porous polymer film according to the present invention is produced using a procedure in which the electroconductive polyaniline-based resin obtained by the above-described electrolytic polymerization method or chemical polymerization method or after-treatment is dissolved in a suitable solvent and then formed by the film casting method into a porous film. Alternatively, the film is produced using a procedure in which the polyaniline resin obtained by the chemical polymerization method is formed by the film casting method into a porous film, which is then doped by the above-described after-treatment.

The solvent used in the film casting method and the coating method are same as for casting the ultra-thin film described above, and methods for producing a porous film will now be described.

In a first method for producing a porous film, when the polyaniline-based resin is dissolved to obtain a uniform dispersion as described above, the polyaniline-based resin is used in a large amount so that a slurry containing undissolved portions is formed, which is formed by the film casting method as described above. This results in an electroconductive porous polymer film having recesses on the surfaces.

In a second method for producing a porous film, when the polyaniline-based resin is dissolved to obtain a uniform dispersion, a soluble polymer or a water-soluble salt is added and, after the dispersion is formed by the film casting method into a film, the soluble polymer or the water-soluble salt is dissolved out.

In this case, the soluble polymer is preferably one which is compatible with the specific solvent used so as to have a considerably greater solubility in the solvent of the polymer than the compatibility of the polyaniline-based resin. Such a combination permits dissolving the soluble polymer by the solvent after the film is formed. Combinations of the polyaniline-based resin, soluble polymer, and dissolving solvent include polyaniline/polyvinyl alcohol/water, polyaniline/poly-(o-anisidine)/N,N-dimethyl formamide, polyaniline/polyacrylonitrile/N,N-dimethyl formamide, and polyaniline/polystyrene/methylethyl ketone.

The water-soluble salt preferably has an adequate solubility in water and is in the form of fine powder; for example, sodium chloride is used. The water-soluble salt is dissolved out by washing the formed film with water.

The soluble polymer or the water-soluble salt is used preferably in amounts of 2 to 10 parts by weight to 100 parts by weight based on the polyaniline-based resin. If the amount is smaller than the above range, a decreased porosity will result. If the amount is greater than the above range, the viscosity of the dispersion will be too high.

The thus obtained electroconductive porous polymer film preferably has a specific surface area of 0.5 $m^2/g$ to 50 $m^2/g$. A film with a greater specific surface area than the above is difficult to prepare, and a film with a smaller specific surface area results in insufficient cell performance.

The electroconductive polymer film according to the present invention also includes one which is based on a cross-linked polyaniline-based resin. By cross-linking, the strength and flexibility of the film can be controlled, and the electroconductivity can be considerably improved.

The cross-linked film can be produced by film casting a solution containing the electroconductive polyaniline-based resin with a cross-linking agent, cross-linking the resin using a cross-linking agent in the chemical polymerization process, or by irradiating the cast polymer film with an electron beam for cross-linking.

The cross-linking agent used in the chemical cross-linking method can be selected from dicarboxylic acids such as terephthalic acid, adipic acid, and fumaric acid, isocyanates such as tolylenediisocyanate and triazine isocyanurate, bis-epoxy compounds such as bisphenol A diglycidylether, acid anhydrides such as pyromellitic anhydride, aldehydes such as formaldehyde, and azide compounds such as anhydrous phthalic acid azide.

The electroconductive polymer film according to the present invention can also be used after orientation. The orientation can be accomplished by, but is not restricted to, the method shown in Japanese Patent Publication OPI No.79930/1985, in which the film is oriented in a single direction in the vapor phase of water, an aqueous solvent, or an organic solvent, or in a wet state where such solvents are present in the liquid state, thereby obtaining a high degree of orientation.

As described above, since the three electroconductive polymer films according to the present invention are monolithically cast without using a binder, they have fairly good electroconductivities and adequate flexibilities. Therefore, the film can be used as an electroconductive material in such applications as electrode active materials for primary cells or secondary cells, high-frequency absorbing materials, EMI shielding materials, various sensors such as moisture sensors and pH sensors, and switching devices; since they are weakly alkaline thin films, in such applications as gas separation membranes, liquid-liquid separation membranes, and ion carrier membranes.

Since, in particular, the second and third electroconductive polymer films have considerably enhanced unit capacities when used in secondary cells as compared with the first electroconductive polymer film, these films can be advantageously used in, for example, lithium secondary cells, thus permitting the construction of lightweight and compact cells. Such lithium secondary cells have high energy densities, which make them ideal for use as back-up power supplies for IC memories and VTRs. Further, they can also be hybridized with solar cells to be used for a long time without supplying additional power.

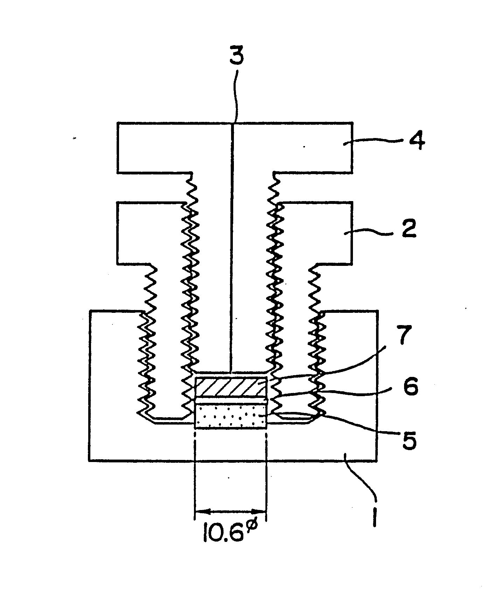

Brief Description of the Drawing

The sole figure is a schematic view showing the structure of a test cell according to the present invention.

Preferred Embodiments of the Present Invention

Production of electroconductive polymer

Lithium perchlorate (16.0 g, 0.15 mole), perchloric acid (22.0 g, 0.15 mole), aniline (14.0 g, 0.15 mole) and a 95% aqueous solution of acetonitrile (500 ml) were placed in a reaction vessel and mixed to form a solution. A platinum-plated titanium electrode (2 cm x 2 cm x 0.1 cm thick) as an anode and a carbon electrode (10 cm x 5 cm x 0.3 cm thick) as a cathode were inserted into the solution and, at a temperature of -10 degrees C in an Ar atmosphere, reacted under agitation by applying a constant current of 3 mA (0.75 mA/cm$^2$) for 12 hours. After the reaction, the polyaniline deposit was removed from the anode, washed with water, and dried under vacuum at room temperature for one day to obtain the electroconductive polyaniline resin in a powdery form. The polymer had a molecular weight (MW) of 117,000 with a MW/Mn of 5.3.

Embodiment 1

7.5 g of the polyaniline powder was added to 17.5 g of dimethylformamide, and homogeneously dispersed using a ball mill on rolls to obtain a solution. The viscosity of the solution was adjusted to about 6,000 cp.

Then, the solution was coated in a thickness of about 500 μm onto a glass substrate using a doctor blade. The coated film was vacuum-dried at 50 degrees C to remove the solvent and, after washing in pure water, removed from the glass substrate to obtain the electroconductive polymer film according to the present invention. The resulting film had a thickness of about 100 μm, and an electroconductivity (measured by a 4-terminal method; hereinafter the same method was used) of 10 (ohm.cm)$^{-1}$.

The tensile strength and tensile elongation of the film were measured in air, in a 40% dimethylformamide aqueous solution, and when impregnated with 10 wt % of diethanolmethylamide. The results are shown in Table 1.

6

Embodiment 2

7.5 g of the polyaniline powder obtained as described above and 17.5 g of dimethylformamide, with tolylenediisocyanate (0.15 g, 2 weight %) added as a cross-linking agent, were homogeneously mixed using the same procedure as in Embodiment 1 to obtain a doped solution. The doped solution was treated as in Embodiment 1 to obtain a cross-linked electroconductive polymer film.

The film had a thickness of about 100 $\mu$m and an electroconductivity of 30 (ohm.cm)$^{-1}$. The film was also measured for tensile strength and tensile elongation as in Embodiment 1. The results are shown in Table 1.

Embodiment 3

Using the same procedure as in Embodiment 1, except that the dimethylformamide solvent was replaced by N-methylpyrrolidone, an electroconductive polymer film was obtained. The film had a thickness of about 100 $\mu$m and an electroconductivity of 15 (ohm.cm)$^{-1}$. The film was measured for tensile strength and tensile elongation. The results are shown in Table 1.

For comparison with the embodiments of the present invention, the following comparison examples were prepared.

Comparison Example 1

A 50% dimethylformamide aqueous solution of 0.6 mole/l of o-anisidine, 0.6 mole/l of HClO$_4$, and 2.4 mole/l of LiClO$_4$ was added dropwise to 0.3 mole/l of (NH$_4$)$_2$S$_2$O$_8$ aqueous solution, and reacted at 40 degrees C for 6 hours to obtain a LiClO$_4$ salt of poly(o-anisidine).

The LiClO$_4$ salt of poly(o-anisidine) was added as a binder to 1.5 g of electroconductive polyaniline powder obtained in Embodiment 1, and melted at 150 degrees C. The molten material was flowed onto a sheet of glass, covered with another sheet of glass, subjected to pressure and cooled, to obtain a sheet of the electroconductive polyaniline containing the binder.

The resulting sheet, with an electroconductivity of 0.05 (ohm.cm)$^{-1}$, was hard, glass-like, and easy to crack.

The product was also measured as in Embodiment 1 for tensile strength and tensile elongation. The results are shown in Table 1.

Comparison Example 2

100 mg of the above-described polyaniline powder was molded under a pressure of 3 t/cm$^2$ to obtain a pellet of 10 mm in diameter and about 100 $\mu$m in thickness.

The pellet had an electroconductivity of 0.04 (ohm.cm)$^{-1}$. It was also measured as in Embodiment 1 for tensile strength and tensile elongation. The results are shown in Table 1.

Table 1

| | Conductivity (ohm.cm)$^{-1}$ | In air | | Dipped in 40% DMF aq. | | Impregnated with diethanolamide (10%) | |
|---|---|---|---|---|---|---|---|
| | | Tensile strength (g/mm$^2$) | Elongation (%) | Tensile strength (g/mm$^2$) | Elongation (%) | Tensile strength (g/mm$^2$) | Elongation (%) |
| Embodiment | | | | | | | |
| 1 | 10 | 2,500 | 2 | 1,700 | 20 | 700 | 120 |
| 2 | 30 | 2,600 | 2 | 1,800 | 20 | 1,000 | 50 |
| 3 | 15 | 2,600 | 2 | 1,800 | 20 | 800 | 150 |
| Comparison Example | | | | | | | |
| 1 | 0.05 | 1,200 | 2 | - | - | - | - |
| 2 | 0.04 | 3,500 | 2 | - | - | - | - |

(Note: - indicates dissolution of polymer)

Test Example 1

The film obtained in Embodiment 3 was punched to a diameter of 10.6 mm (weighing 6.8 mg), and the resultant shape was used as a cathode to compare the properties.

As shown in the drawing, a test cell used in the tests comprised cathode terminal 1, Teflon cylinder 2 which was threaded into the cathode terminal 1, and Teflon material 4 threaded into the inside of Teflon cylinder 2 and having anode terminal 3. The 10.6 mm diameter cathode material 5, separator 6 containing an electrolyte, and anode material 7 were inserted in this order inside Teflon cylinder 2, and then Teflon material 4 was screwed into Teflon cylinder 2.

Thus, cathode material 5, separator 6, and anode material 7 were held by cathode terminal 1 and Teflon material 4.

The anode material, the electrolyte, and test conditions were as follows.

Anode: A Li-Al (15%) alloy sheet (at least equimolar to the cathode)

Electrolyte: 0.4 ml of a 1-M LiCl$_4$ solution in a one-to-one mixture of propylene carbonate and dimethoxyethane.

Test conditions:     Charge current: 100 μA
Charging upper limit terminal voltage: 4.0 V
Discharge current: 100 μA
Discharging lower limit terminal voltage: 2.0 V
Temperature: 20 ± 2 degrees C

As a result, the discharge time to the end voltage of 2.0 V was 5.1 hours.

For comparison, the polyaniline powder pellet (100 mg) obtained in Comparison Example 2 was used as cathode in the same way in the lithium test cell, and the charging/discharging characteristics were tested similarly.

As a result, the discharge duration time to the end voltage of 2.0 V was 41 minutes, which was substantially shorter than the case using the electroconductive polymer film according to the present invention.

Thus, the electroconductive polymer film according to the present invention, in spite of being much smaller than the polyaniline powder pellet used for comparison, showed extremely enhanced properties as cathode active material for the lithium cell.

Embodiment 4

Production of ultra-thin electroconductive polymer film

The above-described polyaniline powder was thoroughly pulverized in an automatic mortar, and the particle size was adjusted using an automatic sieve to obtain finely divided polyaniline particles less than 60 meshes in particle size. 17.5 g of N-methylpyrrolidone was added to 7.5 g of the polyaniline powder, and homogeneously mixed in a ball mill on rolls to obtain a uniform dispersion. Then, the dispersion was coated to a thickness of about 150 μm onto a glass substrate using a doctor blade. The coated film was vacuum-dried at 50 degrees C to remove the solvent, washed with pure water, and removed from the glass substrate to obtain the 25 μm thick, ultra-thin polyaniline film of this embodiment.

Embodiment 5

Using the same procedure as in Embodiment 4, except that 150 mg (2 parts by weight to 100 parts by weight of polyaniline) of pyromellitic anhydride was added when homogeneously dispersing the electroconductive polyaniline powder, a cross-linked polyaniline film of 22 μm in thickness was obtained.

Embodiment 6

Using the same procedure as in Embodiment 4, except that the polyaniline solution was coated to a thickness of 100 μm using a doctor blade, an electroconductive polyaniline film of 15 μm in thickness was obtained.

Embodiment 7

Using the same procedure as in Embodiment 4, except that the polyaniline solution was coated to a thickness of 300 μm using a doctor blade, a film of 60 μm in thickness was obtained.

Embodiment 8

Using the same procedure as in Embodiment 4, except that the polyaniline solution was coated to a thickness of 400 μm using a doctor blade, a polyaniline film of 90 μm in thickness was obtained.

Embodiment 9

Electroconductive porous polyaniline film

The polyaniline powder was thoroughly pulverized using an automatic mortar, and the particle size was adjusted by an automatic sieve to obtain the particle size of minus 60 mesh. The finely divided polyaniline powder was added to a mixed solution of N,N-dimethylformamide and ethylene glycol (9 : 1), and homogeneously dispersed using a ball mill on rolls to obtain a uniform dispersion. The dispersion was then coated to a thickness of about 300 μm on a glass substrate using a doctor blade. The coated film was vacuum-dried at 50 degrees C to remove the solvent washed with pure water, and removed from the glass substrate to obtain the porous polyaniline film according to the present invention. The porous polyaniline film had a thickness of 100 μm and a specific surface area of 14 m²/g.

## Embodiment 10

The uniform dispersion obtained in Embodiment 4 was added to 375 mg (5 parts by weight to 100 parts by weight of polyaniline) of polyacrylonitrile, and the resulting film was immersed as after-treatment in N,N-dimethylformamide to remove the polyacrylonitrile to obtain a porous polyaniline film. The film had a specific surface area of 15 m²/g.

## Embodiment 11

The uniform dispersion obtained in Embodiment 4 was added to 375 mg (5 parts by weight to 100 parts by weight of polyaniline) of sodium chloride powder, and the resulting film was thoroughly washed with water to obtain a porous polyaniline film. The film had a specific surface area of 12 m²/g.

## Comparison Example 3

90 mg of the polyaniline powder obtained in Embodiment 4 with 10 μ graphite powder was press-molded under 3 t/cm² to obtain a pellet 10 mm in diameter and about 100 μm in thickness.

## Test Example 2

The polyaniline films and pellet obtained in Embodiments 4 to 11 and Comparison Example 3 were used as cathode materials and their properties were compared. The test cell used in the tests was the same as described above.

Each of the above films (Embodiments 4 to 11) was punched to a diamter of 10.6 mm (the pellet of Comparison Example 3 was not punched). and vacuum-dried at 50 degrees C. The product was used as cathode 5. A sheet-formed Li-Al alloy (15% Al) in sufficient amounts with respect to the amount of the cathode was used as anode material 7. 0.4 ml of a 1 mole/l solution of lithium perchlorate in a solvent comprising a mixture of propylene carbonate and 1,2-dimethoxyethane (1:1 by volume) was used as the electrolyte. In the preparation of the electrolyte, the components were dried and treated by the conventional method known in the art.

Using the above-described cell, charging and discharging were repeated with a current of 100 μA at 20 degrees C in an argon atmosphere. The unit capacity was determined from the discharge value of the third discharge cycle.

The test results and the thicknesses, specific surface areas, and weight of the cathode materials are shown in Table 2.

# 0 279 407

Table 2

| Embodiment and Comparison Example No. | Cathode material | | Weight | Unit capacity |
|---|---|---|---|---|
| | Thickness | Specific surface area | | |
| | $\mu$m | $m^2/g$ | mg | Ah/g |
| Embodiment 4 (ultra-thin film) | 25 | - | 1.5 | 77 |
| Embodiment 5 (cross-linked film) | 22 | - | 1.5 | 81 |
| Embodiment 6 (ultra-thin film) | 15 | - | 0.7 | 69 |
| Embodiment 7 (ultra-thin film) | 60 | - | 4.5 | 50 |
| Embodiment 8 (ultra-thin film) | 90 | - | 7.5 | 45 |
| Embodiment 9 (porous film) | 100 | 14 | 4.5 | 50 |
| Embodiment 10 (porous film) | 100 | 15 | 4.0 | 55 |
| Embodiment 11 (porous film) | 105 | 12 | 4.5 | 5.2 |
| Comparison Example 3 (press-molded pellet) | 100 | - | 90 | 0.8 |

As shown in Table 2, the ultra-thin polyaniline films of Embodiments 4 to 8, when used as cathode of the lithium secondary cell, exhibited increased unit capacities with improved cell performance, especially in the vicinity of a thickness of 25 $\mu$m. The value was further increased when cross-linked film was used. Improvement in unit capacity was also noted with the porous polyaniline films of Embodiments 9 to 11.

## Claims

1. An electroconductive polymer film comprising an electroconductive polyaniline-based resin containing a dopant, monolithically formed into a film in the absence of a binder.

2. The film of claim 1, wherein said electroconductive polyaniline-based resin is cross-linked.

3. The film of claim 1 or 2 having a thickness of 15 to 100 $\mu$m.

4. The film of any of claims 1 to 3 wherein said film is porous.

5. The film of any of claims 1 to 4 having a specific surface area of 0.5 to 50 $m^2/g$.

11

6. A method for producing an electroconductive polymer film comprising dissolving an electroconductive polyaniline-based resin obtained by electrolytic polymerization in a solvent to form a solution and casting said solution into a film.

7. The method of claim 6, wherein said electroconductive polyaniline-based resin is mixed with a cross-linking reagent.

8. A method for producing an electroconductive polymer film comprising finely pulverizing and dissolving an electroconduc tive polyaniline-based resin obtained by electrolytic polymerization in a solvent to form a uniform dispersion or solution and casting said dispersion or solution into said film.

9. The method of claim 8, wherein said resin has a particle diameter of 0.1 to 10 $\mu$m.

10. A method for producing an electroconductive polymer film comprising preparing a slurry in the form of a homogeneous dispersion of an excess of electroconductive polyaniline-based resin obtained by electrolytic polymerization in a solvent and casting said dispersion into a porous film.

11. A method for producing an electroconductive porous polymer film comprising dissolving an electroconductive polyaniline-based resin and a soluble polymer or a water-soluble salt in a solvent to form a homogeneous dispersion or solution, casting said dispersion or solution into a film, and dissolving said soluble polymer or said water-soluble salt to obtain said film.

12. The method of any of claims 8 to 11, wherein said dispersion contains portions of said resin which are undissolved in said solvent.

13. The method of any of claims 6 to 12, wherein said solvent is an organic acid, an aromatic amine, or an aprotic polar organic compound.

14. The method of any of claims 6 to 13, wherein said dispersion or solution is coated on a substrate and said solvent is removed to form said film.

15. The method of claim 14, wherein said dispersion or solution is coated onto said substrate by solution coating, dip coating, reverse roll coating, or doctor blade coating.

3

4

2

7

6

5

1

10.6$^{\phi}$